(19) **Europäisches Patentamt**

**European Patent Office**

**Office européen des brevets**

(11) **EP 0 844 171 B1**

(12) **FASCICULE DE BREVET EUROPEEN**

(45) Date de publication et mention
de la délivrance du brevet:
**21.07.2004 Bulletin 2004/30**

(51) Int Cl.⁷: **B64C 13/12**

(21) Numéro de dépôt: **97402653.6**

(22) Date de dépôt: **06.11.1997**

(54) **Système de couplage de manches de commande**

Kopplungssystem für eine Steuerknüppeleinheit

Coupling system for control sticks.

(84) Etats contractants désignés:
**DE GB**

(30) Priorité: **22.11.1996 FR 9614289**

(43) Date de publication de la demande:
**27.05.1998 Bulletin 1998/22**

(73) Titulaire: **AIRBUS France**
**31060 Toulouse (FR)**

(72) Inventeurs:
• **Gautier, Jean-Pierre**
**31000 Toulouse (FR)**
• **Todeschi, Michel**
**31770 Colomiers (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 204 598       EP-A- 0 383 663**
**EP-A- 0 384 806       EP-A- 0 659 639**
**US-A- 5 291 113**

• **HEGG J W ET AL: "FEATURES OF ACTIVE SIDESTICK CONTROLLERS" DIGITAL AVIONICS SYSTEMS CONFERENCE, PHOENIX, OCT. 30 - NOV. 3, 1994, no. CONF. 13, 30 octobre 1994, INSTITUTE OF ELECTRICAL AND ELECTRONICS ENGINEERS, pages 305-308, XP000512886**
• **HEGG J W ET AL: "SIDESTICK CONTROLLERS FOR ADVANCED AIRCRAFT COCKPITS" SCIENTIFIC HONEYWELLER, 1 janvier 1993, pages 70-77, XP000429070**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un système de couplage d'au moins deux manches de commande d'un dispositif de commande d'une machine.

Quoique non exclusivement, elle s'applique plus particulièrement aux dispositifs de pilotage pour aéronef et elle sera ci-après plus spécialement décrite en référence à une telle application, étant bien entendu qu'il ne peut en résulter une limitation de la portée de l'invention.

On sait que de nombreuses machines, telles que des avions, des hélicoptères, des chars d'assaut, des engins de travaux publics, etc ..., sont pourvues d'un ensemble d'éléments commandés pouvant être actionnés à partir de l'un ou l'autre de deux postes de commande conjugués, contrôlés par deux opérateurs distincts (appelés pilote et copilote dans le cas de véhicules) et équipés chacun d'un manche de commande articulé de façon à pouvoir être basculé autour d'au moins un axe de basculement.

On connaît différentes solutions pour réaliser un tel couplage de manches de commande.

Une première série de solutions connues préconise d'utiliser des systèmes mécaniques, tels que ceux décrits par exemple dans les documents US-5 137 234 et WO-95/03212.

Toutefois, de telles solutions de couplage mécanique présentent de très nombreux inconvénients, notamment en ce qui concerne la masse, l'encombrement et la maintenance.

Un autre type de solution est décrit dans le document EP-0 384 806 de la demanderesse, qui divulgue un système de couplage électrique selon le préambule de la revendication 1, comportant un manche de commande pourvu d'un moteur électrique permettant, d'une part, de créer une sensation d'effort et permettant, d'autre part, dans le cas de l'association de deux manches de ce type, le suivi du basculement d'un manche par l'autre.

Un tel système de couplage électrique, qui permet de remédier au moins à certains des inconvénients des couplages mécaniques, présente toutefois un inconvénient majeur, à savoir le fait que la panne dudit système électrique fait perdre la sensation d'effort et en particulier le recentrage des manches de commande à une position neutre, en l'absence d'actionnement de ces derniers. Un tel inconvénient ne serait pas acceptable sans précautions particulières notamment pour un avion de transport civil.

Aussi, la mise en oeuvre d'une telle solution par exemple sur un avion de transport civil entraînerait des contraintes importantes, en ce qui concerne ledit système de couplage et notamment la redondance et la fiabilité des éléments le constituant, pour ne pas affecter la sécurité dudit avion.

La présente invention a pour objet de remédier à ces inconvénients. Elle concerne un système de couplage d'au moins deux manches de commande, susceptible d'être réalisé de façon simple et peu encombrante et d'engendrer un couplage particulièrement efficace, pouvant être facilement désactivé.

A cet effet, l'invention définit un système de couplage électrique d'au moins deux manches de commande d'un dispositif de commande d'une machine, avec les caractéristiques de la revendication 1.

Ainsi, grâce à l'invention, on obtient un système de couplage "actif" particulièrement efficace, comme précisé ci-dessous.

De plus, ledit système de couplage peut être facilement désactivé, soit de façon manuelle par l'un des opérateurs, soit de façon automatique par un dispositif approprié, notamment en désactivant ladite unité de calcul.

En outre, en cas de panne du système de couplage conforme à l'invention, à fonctionnement électrique, la sensation d'effort qui est créée par lesdits moyens mécaniques ou hydrauliques générateurs d'une résistance au basculement est conservée, puisque lesdits moyens mécaniques sont indépendants dudit système de couplage, à la différence de la solution connue et précitée du document EP-0 384 806. Aussi, le système de couplage conforme à l'invention peut être réalisé de façon simple et peu redondante.

De façon avantageuse, lorsqu'un seul desdits manches de commande est actionné, dans une première position de basculement, l'organe d'actionnement, par exemple un moteur électrique ou un motoréducteur, de l'autre manche de commande est commandé de manière à amener ce dernier dans une seconde position de basculement, dont l'amplitude de basculement est égale à l'amplitude de basculement de ladite première position de basculement, multipliée par un coefficient déterminé.

En outre, lorsque lesdits manches de commande sont actionnés simultanément, la présente invention peut être mise en oeuvre selon deux variantes différentes.

Dans une première variante, chaque organe d'actionnement est commandé de manière à engendrer dans le manche de commande associé une résistance au basculement de valeur fonction de l'amplitude de basculement de l'autre manche de commande. Ainsi, bien que les manches de commande peuvent être basculés de façon indépendante, les opérateurs sont informés, par la résistance au basculement, de tout actionnement simultané.

Dans une seconde variante, lesdits organes d'actionnement sont commandés de manière à amener lesdits manches de commande dans des positions de basculement identiques, dont l'amplitude de basculement est fonction des efforts respectifs appliqués par les opérateurs sur lesdits manches de commande, ce qui permet d'obtenir des basculements commandés identiques.

Dans cette seconde variante, le système de couplage conforme à l'invention comporte de préférence, pour chacun desdits manches de commande, au moins un capteur d'effort susceptible de mesurer l'effort appliqué par un opérateur sur ledit manche de commande, et ledit système de couplage est désactivé lorsque l'effort appliqué sur l'un desdits manches de commande est supérieur à une valeur prédéfinie.

Selon l'invention, ladite unité de calcul reçoit les informations relatives à la position de basculement des manches de commande, dans une première variante directement desdits capteurs de basculement et, dans une seconde variante, de ladite unité centrale.

Dans ce dernier cas, l'unité de calcul est, de préférence, intégrée dans ladite unité centrale.

Par ailleurs, le système de couplage conforme à l'invention peut également comporter une fonction d'amortissement.

A cet effet, dans un premier mode de réalisation, ledit système de couplage comporte au moins un capteur de vitesse associé à l'un desdits manches de commande et susceptible de mesurer la vitesse de basculement dudit manche de commande, et l'organe d'actionnement associé audit manche de commande est commandé, lors d'un basculement de ce dernier, de manière à engendrer une résistance au basculement, de valeur fonction de la vitesse de basculement mesurée par ledit capteur de vitesse.

Dans un second mode de réalisation, on prévoit au moins un moyen d'amortissement indépendant, par exemple un amortisseur hydraulique, associé à l'un desdits manches de commande.

Bien entendu, il est également envisageable de réaliser un amortissement utilisant simultanément lesdits premier et second modes de réalisation précités.

On notera que le système de couplage peut également être appliqué à une machine, notamment un aéronef, susceptible d'être pilotée par un pilote automatique.

Dans ce cas, selon l'invention, ledit système de couplage comporte :

- dans une première variante, des moyens à action prioritaire qui maintiennent les manches de commande dans une position fixe déterminée, par exemple une position neutre, lorsque ladite machine est pilotée par ledit pilote automatique ; et
- dans une seconde variante, des moyens qui, lorsque ladite machine est pilotée par ledit pilote automatique, font suivre auxdits manches de commande des basculements, d'amplitude correspondant audit pilotage.

Les figures du dessin annexé feront bien comprendre comment l'invention peut être réalisée. Sur ces figures, des références identiques désignent des éléments semblables.

La figure 1 illustre schématiquement un système de couplage conforme à l'invention, dans un premier mode de réalisation.

La figure 2 illustre schématiquement un système de couplage conforme à l'invention, dans un second mode de réalisation.

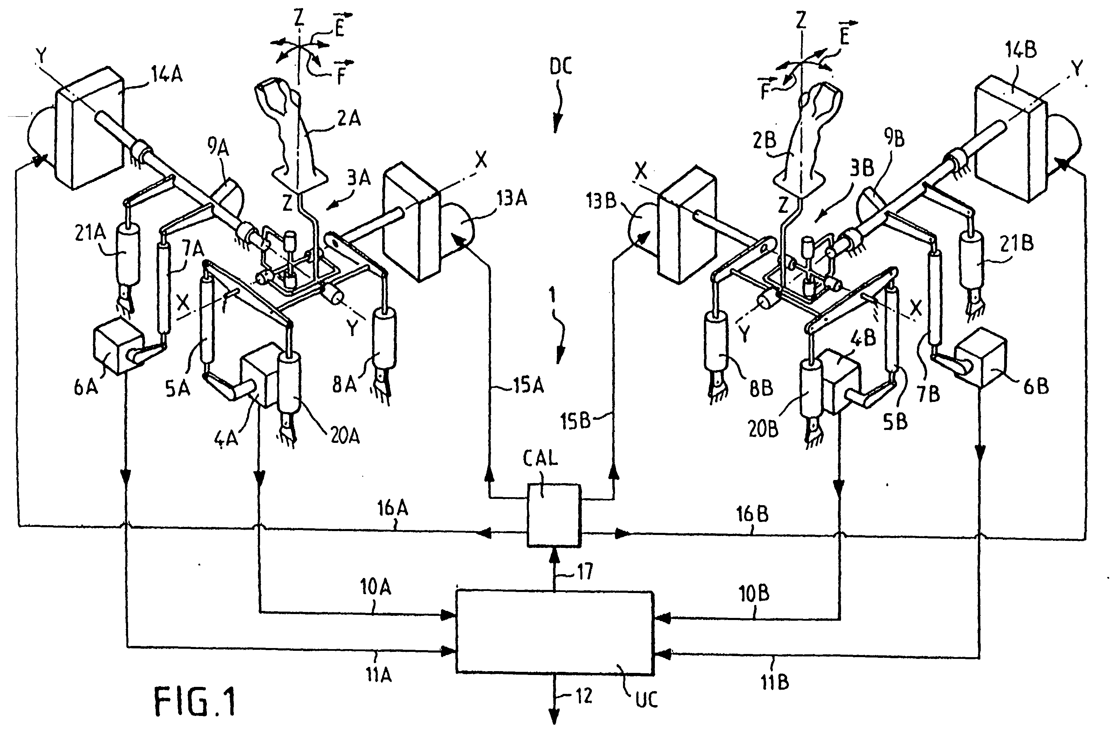

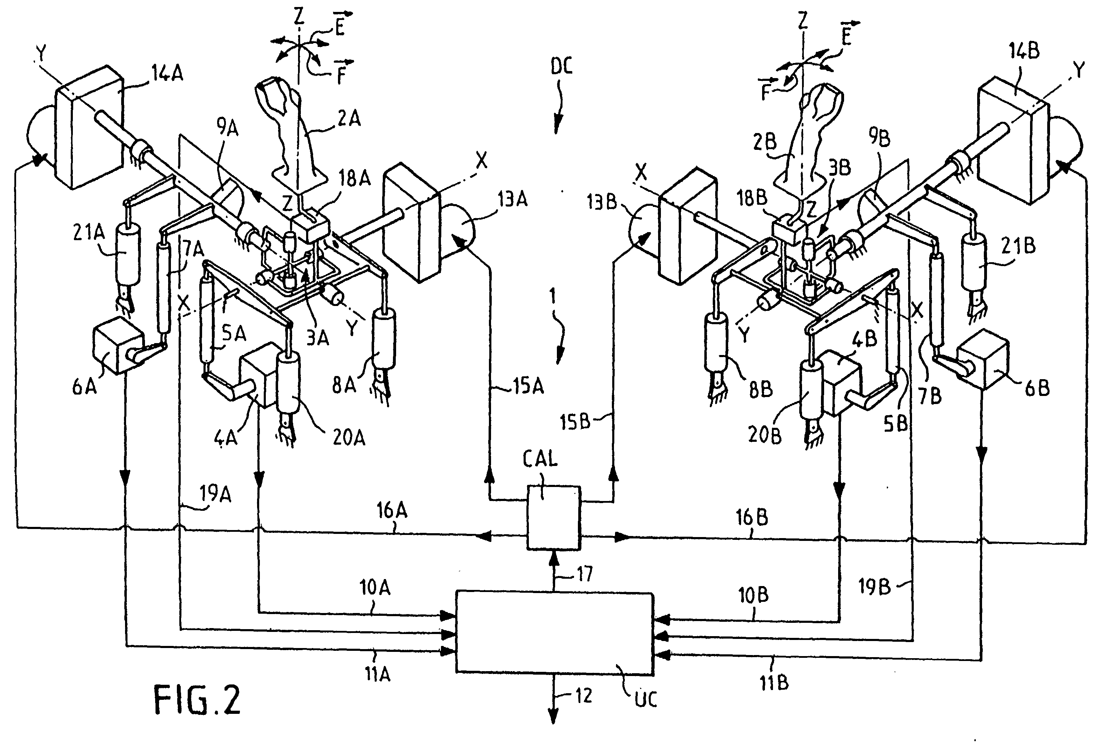

Le système de couplage 1 conforme à l'invention et représenté schématiquement sur les figures 1 et 2, respectivement dans deux modes de réalisation différents, est destiné au couplage de manches de commande 2A et 2B d'un dispositif de commande DC d'une machine, en l'occurrence d'un aéronef, par exemple un avion de transport civil.

De façon connue, lesdits manches de commande 2A et 2B sont réalisés sous forme de poignées actionnables manuellement, respectivement par le pilote et par le copilote de l'aéronef.

Pour piloter ledit aéronef en tangage et en roulis, lesdits manches de commande 2A et 2B qui sont orientés en position neutre ou de repos, longitudinalement suivant un axe Z-Z, peuvent être manoeuvrés :

- d'une part, vers l'avant et vers l'arrière, comme indiqué par une double flèche F, de manière à basculer autour d'un axe transversal X-X, ce qui permet de piloter l'aéronef en tangage ; et
- d'autre part, vers la droite et vers la gauche, comme indiqué par une double flèche $\bar{E}$, de manière à basculer autour d'un axe longitudinal Y-Y, ce qui permet de piloter l'aéronef en roulis.

On notera que ledit dispositif de commande DC comporte des éléments identiques, associés respectivement auxdits manches de commande 2A et 2B et décrits ci-dessus. Pour des raisons de simplification de la description, les éléments identiques seront désignés par le même nombre, suivi soit de la lettre A, soit de la lettre B, selon que lesdits éléments sont associés respectivement au manche 2A ou au manche 2B.

De façon connue, ledit dispositif de commande DC comporte, en plus desdits manches de commande 2A et 2B :

- un mécanisme 3A ou 3B comportant une articulation, par exemple une rotule ou un cardan, permettant audit manche de commande 2A ou 2B de basculer autour de ses axes de basculement X-X et Y-Y ;
- un capteur de basculement 4A ou 4B détectant par l'intermédiaire d'une bielle 5A ou 5B le basculement du manche de commande 2A ou 2B autour de l'axe X-X, de part et d'autre de la position de repos selon Z-Z, et délivrant un signal électrique fonction de l'amplitude dudit basculement ;
- un capteur de basculement 6A ou 6B détectant par l'intermédiaire d'une bielle 7A ou 7B le basculement du manche de commande 2A ou 2B autour de l'axe Y-Y, de part et d'autre de la position de repos selon Z-Z, et délivrant un signal électrique fonction de l'amplitude dudit basculement ;

- des moyens mécaniques 8A ou 8B engendrant une résistance au basculement, lors du basculement dudit manche de commande 2A ou 2B autour de l'axe X-X ;
- des moyens mécaniques 9A ou 9B engendrant une résistance au basculement, lors du basculement dudit manche de commande 2A ou 2B autour de l'axe Y-Y, lesdits moyens mécaniques 8A, 8B, 9A et 9B pouvant par exemple être réalisés sous forme de bielles à ressort, de ressorts à lames ou de ciseaux à ressort ; et
- une unité centrale UC, reliée par des liaisons 10A, 10B, 11A et 11B respectivement aux capteurs 4A, 4B, 6A et 6B, recevant les signaux électriques engendrés par lesdits capteurs 4A, 4B, 6A et 6B, calculant en fonction de ces signaux électriques des ordres de commande d'organes de commande, par exemple des gouvernes, non représentés de l'aéronef, et transmettant lesdits ordres de commande auxdits organes de commande par l'intermédiaire d'une liaison 12.

Le système de couplage 1 conforme à l'invention est appliqué audit dispositif de commande DC de type connu, décrit précédemment.

Selon l'invention, ledit système de couplage 1 comporte :

- pour chacun desdits manches de commande 2A ou 2B, des organes d'actionnement 13A et 14A ou 13B et 14B susceptibles de faire basculer, en fonction d'ordres de basculement reçus, de façon électrique, ledit manche de commande 2A ou 2B respectivement autour des axes de basculement X-X et Y-Y ; et
- une unité de calcul CAL, susceptible d'être activée et désactivée, recevant des informations relatives à la position de basculement desdits manches de commande 2A et 2B et engendrant, lorsqu'elle est activée, lors de l'actionnement (du basculement) d'au moins l'un desdits manches de commande 2A et 2B, des ordres de basculement transmis de façon électrique aux organes d'actionnement de l'autre manche de commande 2A et 2B.

Selon l'invention, lesdits organes d'actionnement 13A, 13B, 14A et 14B qui sont commandés par l'unité de calcul CAL, respectivement par l'intermédiaire de liaisons 15A, 15B, 16A et 16B, peuvent être réalisés chacun sous forme :

- d'un motoréducteur ; ou
- d'un moteur électrique sans réducteur.

De façon connue, lesdits organes d'actionnement 13A, 13B, 14A et 14B sont commandés au moyen d'une régulation électronique, de type usuel, non représentée.

Dans les modes de réalisation représentés sur les figure 1 et 2, ladite unité de calcul CAL réalisée sous forme d'une unité séparée reçoit les informations relatives à la position de basculement des manches de commande 2A et 2B, de l'unité centrale UC par l'intermédiaire d'une liaison 17.

Ladite unité de calcul CAL peut toutefois être réalisée différemment, en particulier :

- elle peut être intégrée dans l'unité centrale UC ; ou
- elle peut être reliée directement aux capteurs 4A, 4B, 6A et 6B et donc être indépendante de ladite unité centrale UC.

On notera que l'unité de calcul CAL, et donc le système de couplage 1, peuvent être désactivés :

- soit de façon manuelle, par l'un des opérateurs ;
- soit de façon automatique, par l'intermédiaire d'un moyen non représenté, par exemple en fonction de la valeur de paramètres mesurés.

Ainsi, le système de couplage 1 peut être activé soit uniquement pendant certaines phases du vol, soit pendant tout le vol.

Selon l'invention, ladite unité de calcul CAL commande, dans le mode de réalisation de la figure 1, les organes d'actionnement 13A, 13B, 14A et 14B de sorte que :

- lorsqu'un seul desdits manches de commande 2A ou 2B est basculé, autour d'un axe de basculement X-X ou Y-Y, dans une première position de basculement, l'organe d'actionnement de l'autre manche de commande, relatif au même axe de basculement, est commandé de manière à amener ce dernier dans une seconde position de basculement, dont l'amplitude de basculement est égale à l'amplitude de basculement de ladite première position de basculement, multipliée par un coefficient ; et
- lorsque les deux manches de commande 2A et 2B sont basculés simultanément, chaque organe d'actionnement est commandé de manière à engendrer dans le manche de commande associé une résistance au basculement, de valeur fonction de l'amplitude de basculement de l'autre manche de commande.

Selon l'invention, lors d'un actionnement ou basculement d'un seul manche, ledit coefficient peut :

- être égal à 1, de manière à obtenir un suivi fidèle du manche de commande non actionné ;
- être inférieur à 1, de sorte que le manche de commande non actionné suit le mouvement du manche de commande actionné, mais avec une amplitude de basculement réduite ; ou
- être supérieur à 1, de manière à obtenir un suivi avec une amplitude de basculement amplifiée.

Dans un autre mode de réalisation, tel que représenté sur la figure 2, l'unité de calcul CAL commande les organes d'actionnement 13A, 13B, 14A et 14B de sorte que :

- lorsqu'un seul desdits manches de commande 2A ou 2B est actionné, la commande est réalisée de manière identique au mode de réalisation de la figure 1 ;
- lorsque les deux manches de commande 2A et 2B sont actionnés simultanément, les organes d'actionnement 13A, 13B, 14A et 14B sont commandés de manière à amener lesdits manches de commande 2A et 2B dans des positions de basculement identiques, dont l'amplitude de basculement est fonction des efforts respectifs appliqués par les opérateurs sur lesdits manches de commande 2A et 2B.

Dans ce cas, ledit système de couplage 1 comporte, de plus, des capteurs d'effort 18A et 18B associés respectivement aux manches de commande 2A et 2B, susceptibles de mesurer l'effort appliqué par un opérateur sur le manche de commande correspondant, et de transmettre lesdites mesures à l'unité centrale UC respectivement par l'intermédiaire de liaisons 19A et 19B.

Selon l'invention, dans ce cas, ledit système de couplage 1 est désactivé lorsque l'effort appliqué sur l'un desdits manches de commande 2A ou 2B et mesuré par le capteur d'effort associé 18A et 18B est supérieur à une valeur prédéfinie.

Ainsi, grâce à l'invention, on obtient un système de couplage "actif" particulièrement efficace.

De plus, en cas de panne dudit système de couplage 1 à fonctionnement électrique, la sensation d'effort qui est créée par les moyens mécaniques 8A, 8B, 9A et 9B indépendants de l'unité de calcul CAL et des organes d'actionnement 13A, 13B, 14A et 14B, est maintenue.

Le système de couplage 1 peut également comporter une fonction d'amortissement.

Pour ce faire :

- ledit système 1 comporte des capteurs de vitesse susceptibles de mesurer la vitesse de basculement des manches de commande 2A et 2B autour des axes X-X et Y-Y. Les capteurs 4A, 4B, 6A et 6B peuvent jouer ce rôle ; et
- l'unité de calcul CAL commande, lors du basculement au moins d'un desdits manches de commande 2A ou 2B autour d'un axe X-X ou Y-Y, l'organe d'actionnement correspondant 13A, 13B, 14A ou 14B de manière à engendrer une résistance au basculement, de valeur fonction de la vitesse de basculement mesurée. Ce mode de réalisation permet de réaliser une fonction d'amortissement complexe.

Cette fonction d'amortissement peut toutefois également être mise en oeuvre par un moyen d'amortissement indépendant, par exemple un amortisseur hydraulique ou à frottement, de type usuel comme les moyens d'amortissement connus 20A, 20B, 21A et 21B représentés sur les figures 1 et 2.

Bien entendu, dans un mode de réalisation particulier, ladite fonction d'amortissement peut être assurée, en partie par l'unité de calcul CAL et au moins un organe d'actionnement et un capteur de vitesse, et en partie par ledit moyen d'amortissement indépendant.

Bien entendu, le système de couplage 1 conforme à l'invention peut également être appliqué à un aéronef muni d'un pilote automatique.

Dans ce cas, ledit système de couplage 1 comporte :

- dans une première variante, des moyens non représentés à action prioritaire qui maintiennent les manches de commande 2A et 2B dans une position fixe déterminée, de préférence la position neutre selon l'axe Z-Z, lorsque l'aéronef est commandé par ledit pilote automatique ; et
- dans une seconde variante, des moyens également non représentés qui, lorsque l'aéronef est piloté par ledit pilote automatique, font suivre auxdits manches de commande 2A et 2B des basculements, d'amplitude correspondant audit pilotage.

**Revendications**

1. Système de couplage électrique d'au moins deux manches de commande (2A, 2B) d'un dispositif de commande (DC) d'une machine, lesdits manches de commande (2A, 2B) étant destinés à être actionnés par des opérateurs distincts et étant chacun monté basculant autour d'au moins un axe de basculement (X-X, Y-Y), ledit système de couplage électrique comportant :

   - pour chacun desdits manches de commande (2A, 2B), au moins un capteur de basculement (4A, 4B, 6A, 6B) délivrant un signal électrique fonction de l'amplitude de basculement dudit manche de commande (2A, 2B) autour de son axe de basculement (X-X, Y-Y), de part et d'autre d'une position neutre (Z-Z) ;
   - pour chacun desdits manches de commande (2A, 2B), au moins un organe d'actionnement (13A, 13B, 14A, 14B) susceptible d'agir, en fonction d'ordres de commande reçus de façon électrique, sur ledit manche de commande (2A, 2B) ; et
   - des moyens de calcul (CAL, UC) recevant les signaux électriques engendrés par lesdits capteurs de basculement (4A, 4B, 6A, 6B) et susceptibles d'adresser de façon électrique en fonction desdits signaux électriques, d'une part, des ordres de commande à des organes de commande de la machine et, d'autre part, des ordres de commande auxdits organes d'actionnement (13A, 13B, 14A, 14B),

**caractérisé en ce que** :

- ledit système de couplage (1) comporte de plus, pour chacun desdits manches de commande (2A, 2B), au moins un moyen mécanique ou hydraulique (8A, 8B, 9A, 9B) indépendant des organes d'actionnement (13A, 13B, 14A, 14B) et des moyens de calcul (CAL, UC) et engendrant une résistance au basculement lors du basculement dudit manche de commande (2A, 2B), de valeur fonction de l'amplitude dudit basculement, de manière à réaliser une fonction de sensation d'effort ;
- lesdits moyens de calcul (CAL) sont susceptibles d'être activés et désactivés pour la génération des ordres de commande desdits organes d'actionnement (13A, 13B, 14A, 14B) ;
- lesdits organes d'actionnement (13A, 13B,14A, 14B) ne sont commandés que lorsque lesdits moyens de calcul (CAL) sont activés ;
- les ordres de commande d'un organe d'actionnement associé à l'un desdits manches de commande dépendent toujours de la position de basculement de l'autre manche de commande de manière à séparer la fonction de sensation d'effort et la fonction de couplage des manches de commande (2A, 2B), la fonction de sensation d'effort étant réalisée exclusivement de façon mécanique par l'action desdits moyens mécaniques ou hydrauliques (8A, 8B, 9A, 9B) et la fonction de couplage étant réalisée de façon électrique par l'action desdits organes d'actionnement (13A, 13B, 14A, 14B) ; et
- lorsqu'un seul desdits manches de commande (2A, 2B) est actionné, dans une première position de basculement, l'organe d'actionnement (13A, 13B, 14A, 14B) de l'autre manche de commande est commandé de manière à amener ce dernier dans une seconde position de basculement, dont l'amplitude de basculement est égale à l'amplitude de basculement de ladite première position de basculement, multipliée par un coefficient déterminé.

2. Système de couplage selon la revendication 1, **caractérisé en ce que** lesdits moyens de calcul (CAL) sont susceptibles d'être désactivés de façon automatique en fonction de la valeur de paramètres mesurés.

3. Système de couplage selon l'une des revendications 1 ou 2,

**caractérisé en ce que**, lorsque lesdits manches de commande (2A, 2B) sont actionnés simultanément, chaque organe d'actionnement (13A, 13B, 14A, 14B) est commandé de manière à engendrer dans le manche de commande associé (2A, 2B) une résistance au basculement, de valeur fonction de l'amplitude de basculement de l'autre manche de commande.

4. Système de couplage selon l'une des revendications 1 ou 2,
**caractérisé en ce que**, lorsque lesdits manches de commande (2A, 2B) sont actionnés simultanément, lesdits organes d'actionnement (13A, 13B, 14A, 14B) sont commandés de manière à amener lesdits manches de commande (2A, 2B) dans des positions de basculement identiques, dont l'amplitude de basculement est fonction des efforts respectifs appliqués par les opérateurs sur lesdits manches de commande (2A, 2B).

5. Système de couplage selon la revendication 4, **caractérisé en ce qu'**il comporte, pour chacun desdits manches de commande (2A, 2B), au moins un capteur d'effort (18A, 18B) susceptible de mesurer l'effort appliqué par un opérateur sur ledit manche de commande (2A, 2B), et **en ce que** ledit système de couplage (1) est désactivé lorsque l'effort appliqué sur l'un desdits manches de commande (2A, 2B) est supérieur à une valeur prédéfinie.

6. Système de couplage selon l'une quelconque des revendications 1 à 5,
**caractérisé en ce que** ledit organe d'actionnement (13A, 13B, 14A, 14B) est un moteur électrique.

7. Système de couplage selon l'une quelconque des revendications 1 à 5,
**caractérisé en ce que** ledit organe d'actionnement (13A, 13B, 14A, 14B) est un motoréducteur.

8. Système de couplage selon l'une quelconque des revendications précédentes,
**caractérisé en ce que** lesdits moyens de calcul (CAL, UC) comportent une unité de calcul (CAL) qui engendre les ordres de commande desdits organes d'actionnement (13A, 13B, 14A, 14B) et une unité centrale (UC) qui engendre les ordres de commande desdits organes de commande de la machine.

9. Système de couplage selon la revendication 8, **caractérisé en ce que** ladite unité de calcul (CAL) reçoit les informations relatives à la position de basculement des manches de commande (2A, 2B), directement desdits capteurs de basculement (4A, 4B, 6A, 6B).

10. Système de couplage selon la revendication 8,

**caractérisé en ce que** ladite unité de calcul (CAL) reçoit les informations relatives à la position de basculement des manches de commande (2A, 2B), de ladite unité centrale (UC).

11. Système de couplage selon l'une quelconque des revendications précédentes,
**caractérisé en ce qu'**il comporte au moins un capteur de vitesse (4A, 4B, 6A, 6B) associé à l'un desdits manches de commande (2A, 2B) et susceptible de mesurer la vitesse de basculement dudit manche de commande (2A, 2B), et **en ce que** l'organe d'actionnement (13A, 13B, 14A, 14B) associé audit manche de commande (2A, 2B) est commandé, lors d'un basculement de ce dernier, de manière à engendrer une résistance au basculement, de valeur fonction de la vitesse de basculement mesurée par ledit capteur de vitesse (4A, 4B, 6A, 6B).

12. Système de couplage selon l'une quelconque des revendications précédentes,
**caractérisé en ce qu'**il comporte au moins un moyen d'amortissement indépendant (20A, 20B, 21 A, 21 B), associé à l'un desdits manches de commande (2A, 2B).

13. Système de couplage selon l'une quelconque des revendications 1 à 12, pour une machine susceptible d'être pilotée par un pilote automatique,
**caractérisé en ce qu'**il comporte des moyens à action prioritaire qui maintiennent les manches de commande (2A, 2B) dans une position fixe déterminée, lorsque ladite machine est pilotée par ledit pilote automatique.

14. Système de couplage selon l'une quelconque des revendications 1 à 12, pour une machine susceptible d'être pilotée par un pilote automatique,
**caractérisé en ce qu'**il comporte des moyens qui, lorsque ladite machine est pilotée par ledit pilote automatique, font suivre auxdits manches de commande (2A, 2B) des basculements, d'amplitude correspondant audit pilotage.

**Patentansprüche**

1. Elektrisches Kopplungssystem für mindestens zwei Steuerknüppel (2A, 2B) einer Steuerungsvorrichtung (DC) einer Maschine, wobei die Steuerknüppel (2A, 28) dazu bestimmt sind, von verschiedenen Bedienern betätigt zu werden und beide um mindestens eine Kippachse (X-X, Y-Y) herum beweglich angebracht sind, und wobei das elektrische Kopplungssystem Folgendes aufweist:

- für jeden der Steuerknüppel (2A, 2B) mindestens einen Positionssensor (4A, 4B, 6A, 6B), der ein elektrisches Signal liefert, das vom Ausschlag des Steuerknüppels (2A, 2B) um seine Kippachse (X-X, Y-Y) herum nach beiden Seiten von einer Null-Position aus (Z-Z) abhängt;
- für jeden der Steuerknüppel (2A, 2B) mindestens ein Betätigungsorgan (13A, 13B, 14A, 14B), das entsprechend den Steuerbefehlen, die es auf elektrischem Weg erhält, auf den Steuerknüppel (2A, 2B) wirken kann; und
- Rechner (CAL, UC), die die elektrischen Signale empfangen, die von den Positionssensoren (4A, 4B, 6A, 6B) erzeugt werden, und entsprechend den elektrischen Signalen auf elektrischem Weg zum einen Steuerbefehle an die Steuerungsorgane der Maschine und zum anderen Steuerbefehle an die Betätigungsorgane (13A, 13B, 14A, 14B) richten können,

**dadurch gekennzeichnet, dass**:

- das Kopplungssystem (1) außerdem für jeden seiner Steuerknüppel (2A, 2B) mindestens eine mechanische oder hydraulische Vorrichtung (8A, 8B, 9A, 9B) aufweist, die unabhängig von den Betätigungsorganen (13A, 13B, 14A, 14B) und den Rechnern (CAL, UC) ist und beim Kippen des Steuerknüppels (2A, 2B) einen Widerstand gegen die Kippbewegung erzeugt, dessen Wert vom Steuerknüppelausschlag abhängt, so dass eine Steuergefühlfunktion realisiert wird;
- der Rechner (CAL) aktiviert und deaktiviert werden kann, um die Steuerbefehle für die Betätigungsorgane (13A, 13B, 14A, 14B) zu erzeugen;
- die Betätigungsorgane (13A, 13B, 14A, 14B) nur dann angesteuert werden, wenn der Rechner (CAL) aktiviert ist;
- die Steuerbefehle eines Betätigungsorgans, das mit einem der Steuerknüppel verbunden ist, immer von der Kippposition des anderen Steuerknüppels abhängen, so dass die Funktion des Steuergefühls und die Funktion der Kopplung der Steuerknüppel (2A, 2B) voneinander getrennt sind, wobei das Steuergefühl ausschließlich auf mechanischem Weg durch die Wirkung der mechanischen oder hydraulischen Vorrichtungen (8A, 8B, 9A, 9B) realisiert wird und die Kopplungsfunktion auf elektrischem Weg durch die Wirkung der Betätigungsorgane (13A, 13B, 14A, 14B) realisiert wird; und
- wenn einer der Steuerknüppel (2A, 2B) betätigt wird, in einer ersten Kippposition das Betätigungsorgan (13A, 13B, 14A, 14B) des anderen Steuerknüppels angesteuert wird, so dass dieser in eine zweite Kippposition gebracht wird, deren Steuerknüppelausschlag genauso groß ist, wie der Steuerknüppelausschlag der ersten Kippposition, multipliziert mit einem bestimmten Koeffizienten.

**2.** Kopplungssystem gemäß Anspruch 1, **dadurch gekennzeichnet, dass** der Rechner (CAL) entsprechend den gemessenen Parameterwerten automatisch deaktiviert werden kann.

**3.** Kopplungssystem gemäß einem der Ansprüche 1 oder 2, **dadurch gekennzeichnet, dass** bei gleichzeitiger Betätigung der Steuerknüppel (2A, 2B) jedes Betätigungsorgan (13A, 13B, 14A, 14B) so angesteuert wird, dass im zugehörigen Steuerknüppel (2A, 2B) ein Widerstand gegen die Kippbewegung erzeugt wird, dessen Wert vom Ausschlag des anderen Steuerknüppels abhängt.

**4.** Kopplungssystem gemäß einem der Ansprüche 1 oder 2, **dadurch gekennzeichnet, dass** bei gleichzeitiger Betätigung der Steuerknüppel (2A, 2B) die Betätigungsorgane (13A, 13B, 14A, 14B) so angesteuert werden, dass die Steuerknüppel (2A, 2B) in identische Kipppositionen gebracht werden, deren Steuerknüppelausschlag von den jeweiligen Kräften abhängt, die die Bediener an den Steuerknüppeln (2A, 2B) anwenden.

**5.** Kopplungssystem gemäß Anspruch 4, **dadurch gekennzeichnet, dass** es für jeden seiner Steuerknüppel (2A, 2B) mindestens einen Kraftaufnehmer (18A, 18B) aufweist, der die Kraft messen kann, die ein Bediener am Steuerknüppel (2A, 2B) anwendet, und dass das Kopplungssystem (1) deaktiviert wird, wenn die Kraft, die an einem der Steuerknüppel (2A, 2B) angewendet wird, einen vordefinierten Wert überschreitet.

**6.** Kopplungssystem gemäß einem der Ansprüche 1 bis 5, **dadurch gekennzeichnet, dass** das Betätigungsorgan (13A, 13B, 14A, 14B) ein Elektromotor ist.

**7.** Kopplungssystem gemäß einem der Ansprüche 1 bis 5, **dadurch gekennzeichnet, dass** das Betätigungsorgan (13A, 13B, 14A, 14B) ein Getriebemotor ist.

**8.** Kopplungssystem gemäß einem der vorstehend genannten Ansprüche, **dadurch gekennzeichnet, dass** die Rechner (CAL, UC) eine Rechnereinheit (CAL) beinhalten, die die Steuerbefehle für die Betätigungsorgane (13A, 13B, 14A, 14B) erzeugt, und eine Zentraleinheit (UC), die die Steuerbefehle für die Steuerungsorgane der Maschine erzeugt.

**9.** Kopplungssystem gemäß Anspruch 8, **dadurch gekennzeichnet, dass** die Rechnereinheit (CAL) die Informationen über die Kippposition der Steuerknüppel (2A, 2B) direkt von den Positionssensoren (4A, 4B, 6A, 6B) erhält.

**10.** Kopplungssystem gemäß Anspruch 8, **dadurch gekennzeichnet, dass** die Rechnereinheit (CAL) die Informationen über die Kippposition der Steuerknüppel (2A, 2B) von der Zentraleinheit (UC) erhält.

**11.** Kopplungssystem gemäß einem der vorstehend genannten Ansprüche, **dadurch gekennzeichnet, dass** es mindestens einen Geschwindigkeitssensor (4A, 4B, 6A, 6B) aufweist, der mit einem der Steuerknüppel (2A, 2B) verbunden ist und die Kippgeschwindigkeit des Steuerknüppels (2A, 2B) messen kann, und dass das Betätigungsorgan (13A, 13B, 14A, 14B), das mit dem Steuerknüppel (2A, 2B) verbunden ist, bei einer Kippbewegung des Steuerknüppels so angesteuert wird, dass ein Widerstand gegen die Kippbewegung erzeugt wird, dessen Wert von der Kippgeschwindigkeit abhängt, die vom Geschwindigkeitssensor (4A, 4B, 6A, 6B) gemessen wird.

**12.** Kopplungssystem gemäß einem der vorstehend genannten Ansprüche, **dadurch gekennzeichnet, dass** es mindestens eine unabhängige Dämpfungsvorrichtung (20A, 20B, 21A, 21B) aufweist, die mit einem der Steuerknüppel (2A, 2B) verbunden ist.

**13.** Kopplungssystem gemäß einem der Ansprüche 1 bis 12 für eine Maschine, die so ausgelegt ist, dass sie von einem Autopiloten gesteuert werden kann, **dadurch gekennzeichnet, dass** es Vorrichtungen für eine prioritäre Funktion aufweist, die die Steuerknüppel (2A, 2B) in einer bestimmten fixen Position halten, wenn die Maschine vom Autopiloten gesteuert wird.

**14.** Kopplungssystem gemäß einem der Ansprüche 1 bis 12 für eine Maschine, die so ausgelegt ist, dass sie von einem Autopiloten gesteuert werden kann, **dadurch gekennzeichnet, dass** es Vorrichtungen aufweist, die, wenn die Maschine vom Autopiloten gesteuert wird, an den Steuerknüppeln (2A, 2B) Kippbewegungen mit einem Ausschlag folgen lassen, der der Steuerung entspricht.

**Claims**

**1.** System for electrically coupling at least two control columns (2A, 2B) of a control device (DC) of a machine, said control columns (2A, 2B) being intended to be operated by separate operators and each being mounted so that it can tilt about at least one axis of tilting (X-X, Y-Y), said electrical coupling system comprising:

- for each of said control columns (2A, 2B), at least one tilt sensor (4A, 4B, 6A, 6B) delivering an electrical signal that is a function of the amplitude of tilting of said control column (2A, 2B) about its axis of tilting (X-X, Y-Y) on either side of a neutral position (Z-Z);

- for each of said control columns (2A, 2B), at least one operating member (13A, 13B, 14A, 14B) capable of acting, in accordance with commands received electrically, on said control column (2A, 2B); and

- calculation means (CAL, UC) receiving the electrical signals generated by said tilt sensors (4A, 4B, 6A, 6B) and capable of sending electrically, on the basis of said electrical signals, on the one hand, commands to control members of the machine and, on the other hand, commands to said operating members (13A, 13B, 14A, 14B),

**characterized in that**:

- said coupling system (1) comprises in addition, for each of said control columns (2A, 2B), at least one mechanical or hydraulic means (8A, 8B, 9A, 9B) independent of the operating members (13A, 13B, 14A, 14B) and the calculation means (CAL, UC) and generating resistance to tilting when said control column (2A, 2B) is tilted, the amount of resistance being a function of the amplitude of said tilting, so as to produce a force sensation function;

- said calculation means (CAL) can be activated and deactivated for generating the commands for said operating members (13A, 13B, 14A, 14B);

- said operating members (13A, 13B, 14A, 14B) are commanded only when said calculation means (CAL) are activated;

- the commands for one operating member associated with one of said control columns always depend on the tilted position of the other control column so that the force sensation function and the function of coupling the control columns (2A, 2B) are separate, the force sensation function being achieved purely mechanically by the action of said mechanical or hydraulic means (8A, 8B, 9A, 9B) and the coupling function being achieved electrically by the action of said operating members (13A, 13B, 14A, 14B); and

- when just one of said control columns (2A, 2B) is operated, in a first position of tilting, the operating member (13A, 13B, 14A, 14B) of the other control column is commanded to bring this operating member into a second position of tilting, the amplitude of tilting of which is equal to the amplitude of tilting of said first tilted position, multiplied by a determined coefficient.

2. Coupling system according to Claim 1, **characterized in that** said calculation means (CAL) can be deactivated automatically according to the value of the parameters measured.

3. Coupling system according to either of Claims 1 and 2, **characterized in that** when said control columns (2A, 2B) are operated simultaneously, each operating member (13A, 13B, 14A, 14B) is commanded so that a resistance to the tilting, with a value that is a function of the amplitude of tilting of the other control column, is generated in the associated control column (2A, 2B).

4. Coupling system according to either of Claims 1 and 2, **characterized in that** when said control columns (2A, 2B) are operated simultaneously, said operating members (13A, 13B, 14A, 14B) are commanded in such a way as to bring said control columns (2A, 2B) into identical positions of tilting, the amplitude of tilting of which is a function of the respective forces applied by the operators to said control columns (2A, 2B).

5. Coupling system according to Claim 4, **characterized in that** it comprises, for each of said control columns (2A, 2B) at least one load sensor (18A, 18B) capable of measuring the force applied by one operator to said control column (2A, 2B), and **in that** said coupling system (1) is deactivated when the force applied to one of said control columns (2A, 2B) exceeds a predefined value.

6. Coupling system according to any one of Claims 1 to 5, **characterized in that** said operating member (13A, 13B, 14A, 14B) is an electric motor.

7. Coupling system according to any one of Claims 1 to 5, **characterized in that** said operating member (13A, 13B, 14A, 14B) is a geared motor unit.

8. Coupling system according to any one of the preceding claims, **characterized in that** said calculation means (CAL, UC) comprise a calculation unit (CAL) which generates the commands for said operating members (13A, 13B, 14A, 14B) and a central unit (UC) which generates the commands for said control members of the machine.

9. Coupling system according to Claim 8, **characterized in that** said calculation unit (CAL) receives information relating to the position of tilting of the control columns (2A, 2B) directly from said tilt sensors (4A, 4B, 6A, 6B).

**10.** Coupling system according to Claim 8, **characterized in that** said calculation unit (CAL) receives information relating to the position of tilting of the control columns (2A, 2B) from said central unit (UC).

**11.** Coupling system according to any one of the preceding claims, **characterized in that** it comprises at least one speed sensor (4A, 4B, 6A, 6B) associated with one of said control columns (2A, 2B) and capable of measuring the rate of tilt of said control column (2A, 2B), and **in that** the operating member (13A, 13B, 14A, 14B) associated with said control column (2A, 2B) is commanded, when it tilts, in such a way as to generate resistance to tilting, the value of this resistance being a function of the rate of tilt measured by said speed sensor (4A, 4B, 6A, 6B).

**12.** Coupling system according to any one of the preceding claims, **characterized in that** it comprises at least one independent damping means (20A, 20B, 21A, 21B) associated with one of said control columns (2A, 2B).

**13.** Coupling system according to any one of Claims 1 to 12, for a machine that can be controlled by an automatic pilot, **characterized in that** it comprises priority-action means which keep the control columns (2A, 2B) in a determined set position when said machine is being controlled by said automatic pilot.

**14.** Coupling system according to any one of Claims 1 to 12 for a machine that can be controlled by an automatic pilot, **characterized in that** it comprises means which, when said machine is being controlled by said automatic pilot, make said control columns (2A, 2B) follow the tilting with amplitude that corresponds to said control.

FIG.1

FIG.2

EP 0 844 171 B1